(19) Europäisches Patentamt
European Patent Office
Office européen des brevets

(11) **EP 1 277 075 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(21) Anmeldenummer: **01940190.0**

(22) Anmeldetag: **25.04.2001**

(51) Int Cl.:
***G02C 7/02*** *(2006.01)*

(86) Internationale Anmeldenummer:
**PCT/DE2001/001580**

(87) Internationale Veröffentlichungsnummer:
**WO 2001/081985 (01.11.2001 Gazette 2001/44)**

(54) **PROGRESSIVES BRILLENGLAS MIT GERINGEN VERGRÖSSERUNGSUNTERSCHIEDEN**

PROGRESSIVE SPECTACLE GLASS WITH LOW MAGNIFYING DIFFERENCES

VERRE DE LUNETTES PROGRESSIF A FAIBLES DIFFERENCES DE GROSSISSEMENT

(84) Benannte Vertragsstaaten:
**DE ES FR GB IT**

(30) Priorität: **25.04.2000 DE 10020240**
**25.04.2000 DE 10020244**
**28.04.2000 DE 10021047**
**17.01.2001 WOPCT/DE01/00188**

(43) Veröffentlichungstag der Anmeldung:
**22.01.2003 Patentblatt 2003/04**

(73) Patentinhaber: **Rodenstock GmbH**
**80469 München (DE)**

(72) Erfinder:
• **WELK, Andrea**
**81547 München (DE)**
• **BAUMBACH, Peter**
**81543 München (DE)**

• **HAIMERL, Walter**
**80337 München (DE)**
• **PFEIFFER, Herbert**
**81247 München (DE)**
• **ALTHEIMER, Helmut**
**87650 Lauchdorf (DE)**
• **DORSCH, Rainer**
**81477 München (DE)**
• **ESSER, Georg**
**81735 München (DE)**

(74) Vertreter: **Müller-Boré & Partner**
**Patentanwälte**
**Grafinger Strasse 2**
**81671 München (DE)**

(56) Entgegenhaltungen:
**EP-A- 0 627 645          EP-A- 0 809 126**

**Beschreibung**

**Technisches Gebiet**

Die Erfindung bezieht sich auf ein Verfahren zum Herstellen eines progressiven Brillenglases mit geringen Vergrößerungsunterschieden zwischen Fern- und Nahteil gemäß dem Oberbegriff des Patentanspruchs 1.

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet und insbesondere zum Lesen ausgelegt ist. Für Spezialanwendungen - genannt werden sollen hier exemplarisch Pilotenbrillen oder Brillen für Bildschirmarbeitsplätze - können der Fern- und der Nahteil auch anders angeordnet sein und/oder für andere Entfernungen ausgelegt sein. Ferner ist es möglich, daß mehrere Nahteile und/oder mehrere Fernteile und entsprechende Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben.) Die Hauptkrümmungsradien bestimmen zusammen mit dem Brechungsindex n des Glasmaterials die für die augenoptische Charakterisierung einer Fläche häufig verwendeten Größen:

$$\text{Flächenbrechwert D} = 0{,}5 * (n-1) * (1/R1 + 1/R2)$$

$$\text{Flächenastigmatismus A} = (n-1) * (1/R1 - 1/R2)$$

Der Flächenbrechwert D ist die Größe, über die die Zunahme der Wirkung vom Fernteil zum Nahteil erreicht wird. Der Flächenastigmatismus A (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

**Stand der Technik**

Aufgrund der unterschiedlichen Wirkungen im Fern- und im Nahteil ergeben sich zwangsläufig im Nah- und im Fernteil unterschiedliche Vergrößerungen, die sich störend für den Brillenträger auswirken.

In der EP-A-0 809 126 ist ein progressives Brillenglas beschrieben, bei dem die Unterschiede in der Vergrößerung zwischen dem Nah- und Fernbereich reduziert werden sollen.

Hierzu werden Formeln für die Berechnung der Vergrößerung verwendet, die - wie erfindungsgemäß erkannt worden ist - nicht geeignet sind, die Vergrößerung bei einem progressiven Brillenglas an einer beliebigen Stelle zu berechnen. Grundlage für die in der EP-A-0 809 126 benutzten Formeln ist nämlich ein zentriertes optisches System, bei dem der Hauptstrahl ungebrochen durch das Brillenglas verläuft. Hierzu wird auf das Lehrbuch von Josef Reiner "Auge und Brille" verwiesen, auf das im übrigen zur Erläuterung aller hier nicht näher beschriebenen Begriffe ausdrücklich Bezug genommen wird.

Bevor auf die Erfindung näher eingegangen wird, soll auf die in der EP-A-0 809 126 benutzten Formeln eingegangen werden:

Die klassischen Formeln für die Vergrößerung r eines zentrierten afokalen Systems, wie sie in der EP-A-0 809 126 verwendet werden, lauten:

$$\text{Vergrößerung} \quad \Gamma = N = \frac{\tan w'}{\tan w} = \frac{\dfrac{h}{f'_2}}{\dfrac{h}{f'_1}} = \frac{f'_1}{f'_2} = \frac{f'_1}{f'_1 - e} = \frac{1}{1 - eD1}$$

$$\text{Abbildungsmaßstab (lateral)} \quad \beta = \frac{y'}{y} = \frac{f'_2 \tan wo}{f'_1 \tan wo} = \frac{f'_2}{f'_1} = \frac{1}{\Gamma}$$

Gesamtvergrößerung Ng eines afokalen Systems bestehend aus vollkorrigierendem Brillenglas und Refraktionsdefizit

$$Ng = \frac{1}{1 - \overline{e} D_{Br}} = 1 + \overline{e} \, A_R$$

$$Ng = Ne * Ns$$

mit:

$D_{Br}$   Brechwert des Brillenglases
$A_R$   Fernpunktrefraktion des Auges
e   Abstand zwischen der bildseitigen Hauptebene des Brillenglases und der objektseitigen Hauptebene des Auges

Sytemvergrößerung Ns eines afokalen Systems bestehend aus dünnem Brillenglas und Refraktionsdefizit

$$Ns = \frac{1}{1 - e^* S'}$$

mit:

S'   Scheitelbrechwert des Brillenglases
e*   Abstand vom bildseitigen Scheitel des Brillenglases bis zur Hauptebene des Auges

Eigenvergrößerung eines afokalen Systems bestehend aus gedachtem", afokalen Brillenglas mit gleichem Vorderflächenbrechwert und Dicke.

$$Ne = \frac{1}{1 - \dfrac{d}{n} D_1}$$

mit:

$D_1$   Flächenbrechwert der Vorderfläche
d   Dicke des Brillenglases
n   Brechungsindex bzw. Brechzahl des Brillenglases

3

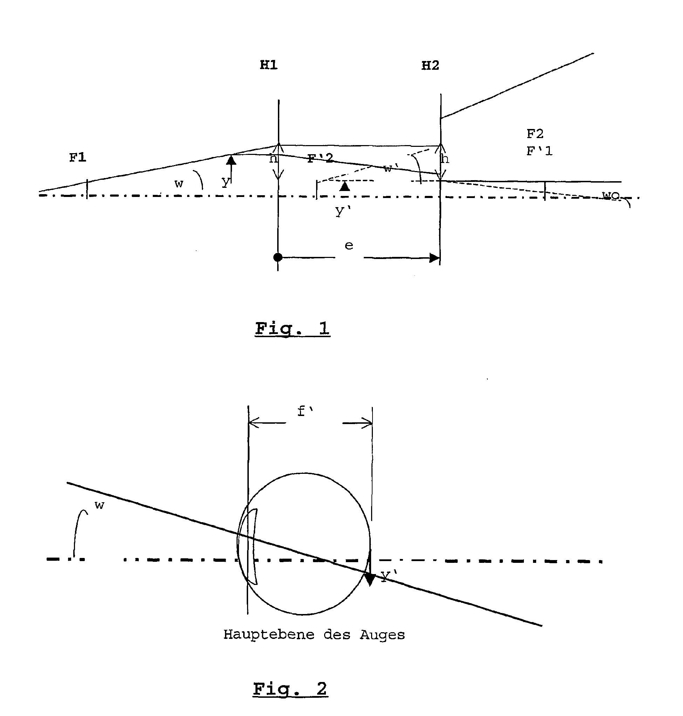

Zur näheren Erläuterung der gemachten Annahmen sowie der verwendeten Größen wird auf Fig. 1 verwiesen, in der das Modell eines zentrierten afokalen optischen Systems und die bei diesem System resultierende Vergrößerung zeichnerisch dargestellt sind.

**Darstellung der Erfindung**

Erfindungsgemäß ist erkannt worden, daß die vorstehend genannten, für zentrierte optische Systeme geltenden Formeln bei Brillengläsern unzutreffende Ergebnisse liefern, sofern nicht die Vergrößerung am Scheitel berechnet werden soll:

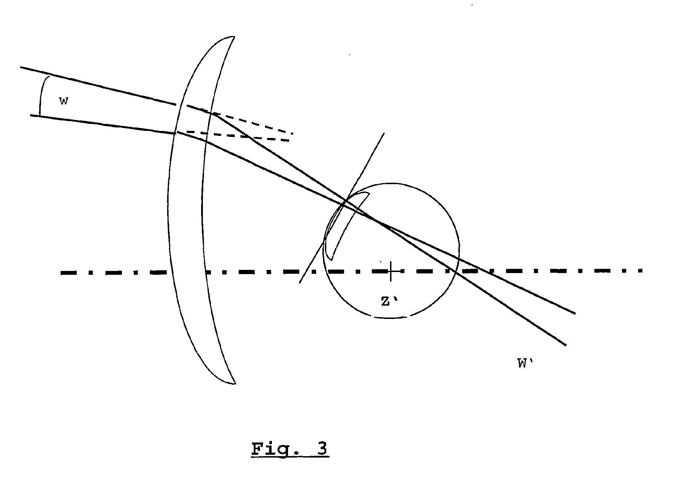

Dies soll im folgenden unter Bezugnahme auf die Fig. 2 und 3 näher beschrieben werden:

Die Vergrößerung ist definiert als Quotient der Netzhautbildgröße mit Brillenglas zur Netzhautbildgröße ohne Brillenglas.

Wie man aus den Fig. 2 und 3 sieht ist die Netzhautbildgröße gleich dem Produkt aus der Brennweite des Auges und dem Tangens des Sehwinkels. Daraus folgt:

$$\Gamma = \frac{\tan w'}{\tan w}$$

Um nun die benötigten Größen, nämlich die objektseitigen und bildseitigen Sehwinkel zu erhalten, muß man zuerst einem zentralen Hauptstrahl, der durch den Augendrehpunkt Z' verläuft, berechnen. Dieser trifft auf die Mitte der Fovea. Als nächstes muß der Ort der Eintrittspupille des Auges berechnet werden und anschließend ein (oder mehrere) Strahlen, die durch die Mitte der Eintrittspupille verlaufen und einen zum Hauptstrahl geringfügig unterschiedlichen bildseitigen Sehwinkel aufweisen. Die Winkel zwischen diesem Strahl und dem zentralen Hauptstrahl ergeben dann die Sehwinkel.

Man kann auch die Strahlen anstatt durch die Mitte der Eintrittspupille durch Z' laufen lassen. Dann erhält man die Blickwinkelvergrößerung.

Die Unterschiede zwischen der gemäß dem Stand der Technik verwendeten Formel und der erfindungsgemäß exakt vorgenommenen Berechnung soll am Beispiel eines Einstärkenglases mit einer sphärischen Wirkung sph = 0,5 dpt, einem Berechnungsindex n = 1,604, einer Vorderfläche mit einer Wirkung D1 = 4,89 dpt und einer Mittendicke d = 1,54 mm sowie e = 15 mm demonstriert werden:

Für ein derartiges Glas beträgt die Gesamtvergrößerung Ng = 1,32.

Sowohl die klassische Formel als auch die korrekte Berechnung liefern als Vergrößerung [%] am Scheitel {x = 0; y = 0} den Wert 1,34.

Dagegen beträgt die Vergrößerung [%] in der Peripherie {x = 20; y = 20} nach der klassischen Formel 1,65, während die korrekte Berechnung den Wert 3,18 liefert.

Die klassische Formel liefert - wie bei den Voraussetzungen auch nicht anders zu erwarten - zwar am Scheitel korrekte Ergebnisse, in der Peripherie versagt jedoch aufgrund der gemachten Voraussetzungen die klassische Formel.

Bei einem progressiven Brillenglas sind die Abweichungen noch größer.

Als Beispiel soll ein progressives Brillenglas mit einer sphärische Wirkung sph = +0,5 dpt, einer Addition Add = 2,5 dpt, und einer Flächenbrechkraft D1 = 5,18 dpt im Fernbezugspunkt sowie einer Dicke d = 2,57 mm und e = 15 mm betrachtet werden:

Als Vergrößerung [%] im Fernbezugspunkt {x = 0; y = 8} erhält man nach der klassischen Formel 1,67, während die korrekte Berechnung den Wert 2,04 liefert. Im Nahbezugspunkt {x = 2,5; y = -14} beträgt die Vergrößerung in Prozent nach der klassischen Formel 6,67, während die korrekte Berechnung 7,48 ergibt.

Dabei ergeben sich nicht nur Unterschiede in den Absolutbeträgen der Vergrößerung sondern auch in der Struktur der Vergrößerungsverteilung:

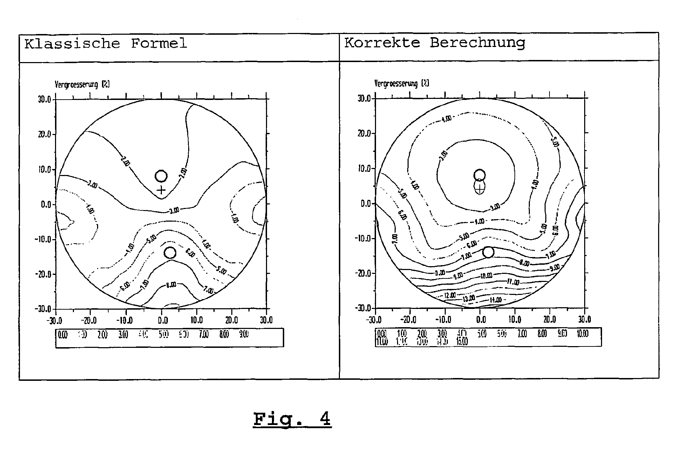

In Fig. 4 sind die Isolinien für die Vergrößerung berechnet nach der klassischen Formel und nach der korrekten Berechnung einander gegenübergestellt.

Damit sind die in der EP-A-0 809 126 gemachten Aussagen über die Vergrößerung unzutreffend.

Wie erfindungsgemäß erkannt worden ist, ist es bei weitem nicht ausreichend, die progressive Fläche auf die Rückfläche zu legen, um ein Brillenglas mit geringen Vergrößerungsunterschieden im Fern- und Nahbezugspunkt zu erhalten.

Der Erfindung liegt die Aufgabe zugrunde, ein Herstellungsverfahren für progressives Brillenglas gemäß dem Oberbegriff des Patentanspruchs 1 anzugeben, bei dem die Unterschiede in der Vergrößerung zwischen Fernteil und Nahteil im Vergleich zum Stand der Technik deutlich geringer sind. Ferner soll erfindungsgemäß eine Serie von Brillengläsern angegeben werden, bei der die Unterschiede zwischen progressiven Brillengläsern unterschiedlicher Wirkung und/oder Addition im Vergleich zum Stand der Technik deutlich reduziert sind.

Erfindungsgemäße Lösungen dieser Aufgabe sind im unabhängigen Patentanspruch angegeben. Weiterbildungen der Erfindung sind Gegenstand der abhängigen Ansprüche.

Um ein möglichst angenehmes dynamisches Sehen zu erhalten muß die Vergrößerung bestimmte Bedingungen erfüllen:

Die Vergrößerung muß möglichst gering sein.

1. Die Änderung der Vergrößerung für jede Blickrichtung muß möglichst klein sein.
2. Die Vergrößerung muß möglichst, wie bei Einstärkengläsern, radial zunehmen.
3. Der Unterschied der Vergrößerung zwischen dem Fern- und Nahbezugspunkt muß möglichst gering sein.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1     eine Darstellung zur Erläuterung der Ableitung der klassischen Formel,
Fig. 2     eine Darstellung zur Erläuterung der korrekten Berechnung der Vergrößerung,
Fig. 3     eine Darstellung zur Erläuterung der Berechnung der außeraxialen Vergrößerung,
Fig. 4     eine Gegenüberstellung der mit der klassischen Formel und der korrekten Berechnung erhaltenen Vergrößerungswerte,
Fig. 5     die Vergrößerung für jede Blickrichtung für ein Ausführungsbeispiel der Erfindung,
Fig. 6     zum Vergleich die Vergrößerung für ein herkömmliches Brillenglas gleicher Wirkung und Addition, und
Fig. 7     und 8 die astigmatische Abweichung und den mittleren Gebrauchswert des in Fig. 6 dargestellten Ausführungsbeispiels,
Fig. 9     bis 13 die Vergrößerung bei Ausführungsbeispielen nach der Erfindung für verschiedene Wirkungen,
Fig. 14a    die Pfeilhöhe der progressiven Fläche eines konkreten Ausführungsbeispiels,
Fig. 14b    die Isolinien der astigmatischen Abweichung,
Fig. 14c    die Isolinien des mittleren Gebrauchswerts,
Fig. 14d    die Isolinien des Flächenastigmatismus, und
Fig. 14e    die Isolinien der mittleren Flächenbrechkraft für dieses Ausführungsbeispiel.

## Darstellung von Ausführungsbeispielen

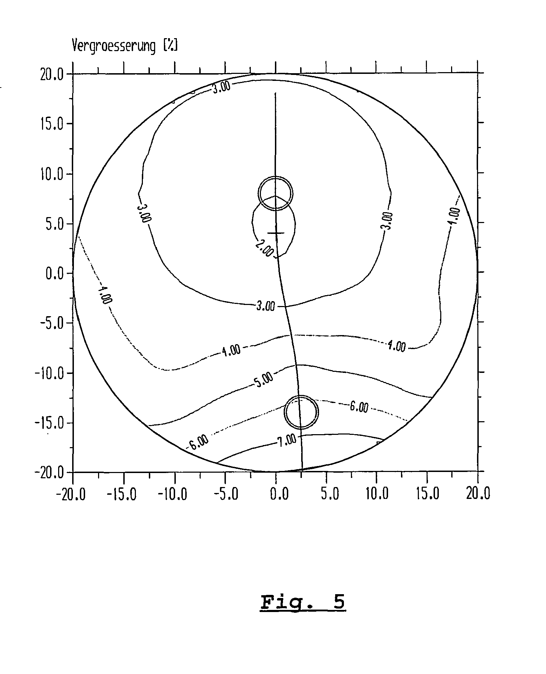

Figur 5 zeigt die Vergrößerung für jede Blickrichtung für ein Ausführungsbeispiel der Erfindung. Aufgetragen sind die "Isolinien" der Vergrößerung als Funktion der Koordinaten $(x, y)$ der Durchstoßpunkte der Hauptstrahlen durch die Vorderfläche.

Das in Fig. 5 dargestellte erfindungsgemäße Brillenglas hat die Werte sph +0,5 dpt und Addition Add 2,0 dpt.

Man erkennt die gleichmäßige Änderung der Vergrößerung und den einstärkenähnlichen Verlauf der Isolinien:

Die Isolinien verlaufen bedeutend konzentrischer als beim Stand der Technik. Weiterhin sind der Unterschied und auch die Absolutwerte der Vergrößerung im bzw. zwischen dem Fernbezugspunkt und Nahbezugspunkt sehr gering. Die Vergrößerung im Fernbezugspunkt beträgt 2,0 %, im Nahbezugspunkt 6,3 % und der Unterschied damit nur 4,3 %.

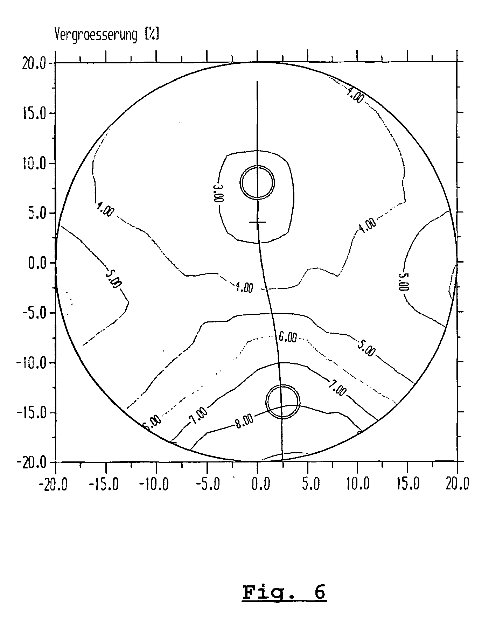

Fig. 6 zeigt zum Vergleich die Vergrößerung für ein herkömmliches Brillenglas gleicher Wirkung und Addition. Die Vergrößerung ist insgesamt größer und die Isolinien verlaufen nicht so konzentrisch, also weniger einstärkenähnlich, wie bei der Erfindung.

Die Vergrößerung im Fernbezugspunkt beträgt 2,8 %, im Nahbezugspunkt 7,9 % und der Unterschied damit 5,1 %.

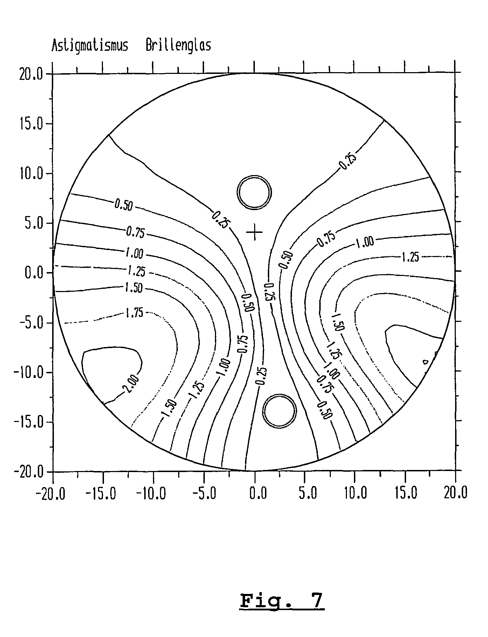

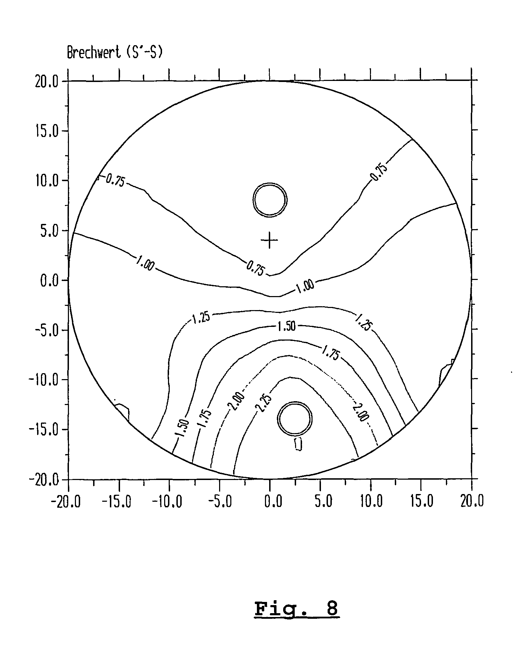

Die Fig. 7 und 8 zeigen die astigmatische Abweichung und den mittleren Gebrauchswert dieses Ausführungsbeispiels der Erfindung innerhalb eines Kreises mit dem Radius 20 mm um einen Punkt, der 4 mm unterhalb des sogenannten Zentrierkreuzes liegt. Der Fernbezugspunkt und der Nahbezugspunkt sind mit Kreisen bezeichnet, ihre Lage ist dem jeweiligen Figuren zu entnehmen.

In Fig. 7 ist die sogenannte astigmatische Abweichung, d. h. der "Rest-Astigmatismus" des Systems Brillenglas/Auge mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.

In Fig. 8 ist der mittlere Gebrauchswert D, d. h. der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

ebenfalls in Form sogenannter Isolinien beginnend mit der Isolinie 0,75 dpt dargestellt.

Die Fig. 7 und 8 zeigen, daß sowohl der Fernteil als auch der Nahteil relativ groß sind. Weiterhin nimmt im Fernteil der mittlere Gebrauchswert zur Peripherie hin kaum zu, im Nahteil nur wenig ab. Die maximale astigmatische Abweichung ist sehr gering, der Unterschied zwischen der maximalen Abweichung nasal und temporal unbedeutend.

In allen Figuren ist die Abszisse (x-Achse) die horizontale Achse und der Ordinate (y-Achse) die vertikale Achse in Gebrauchsstellung.

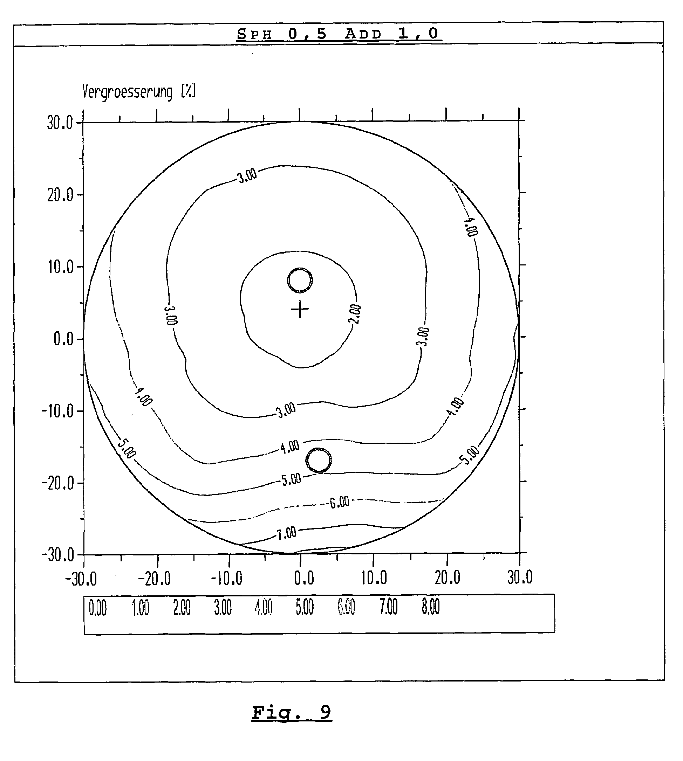

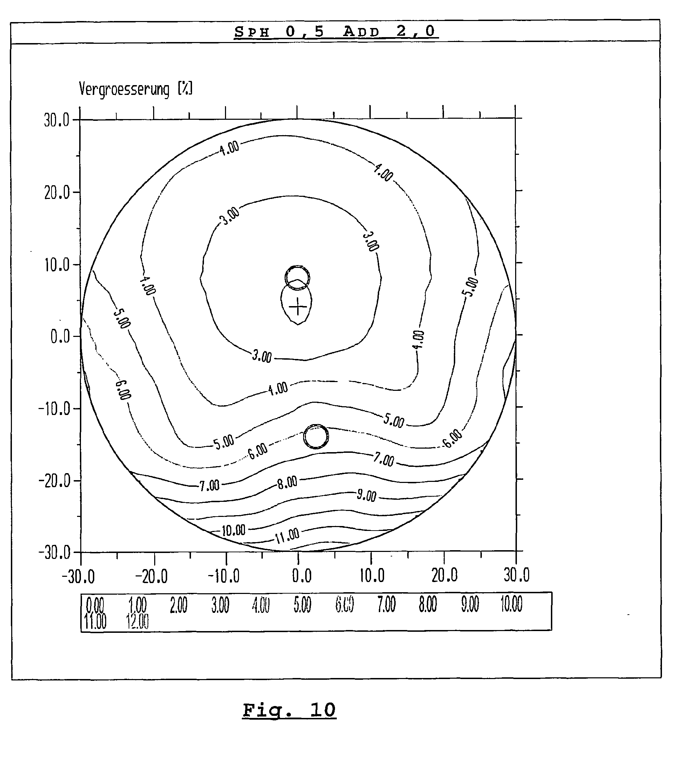

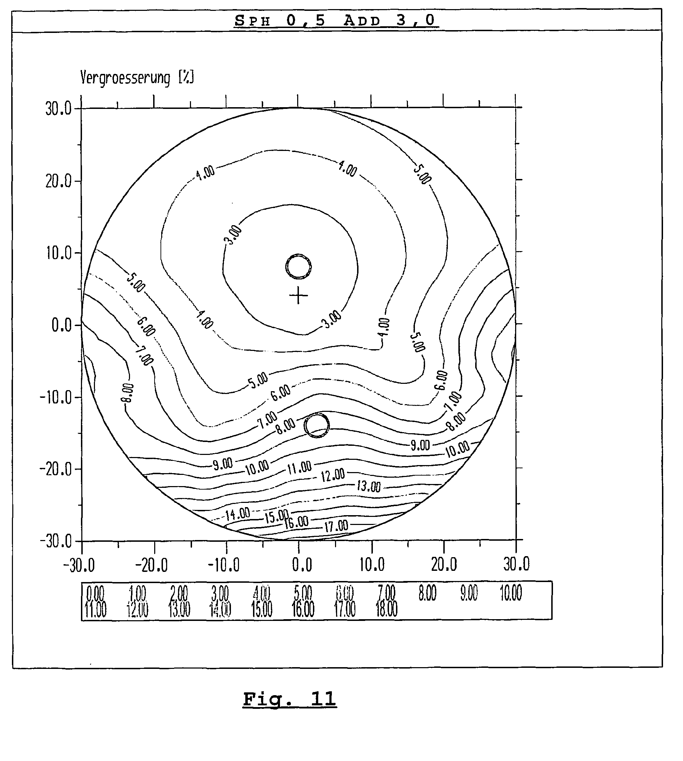

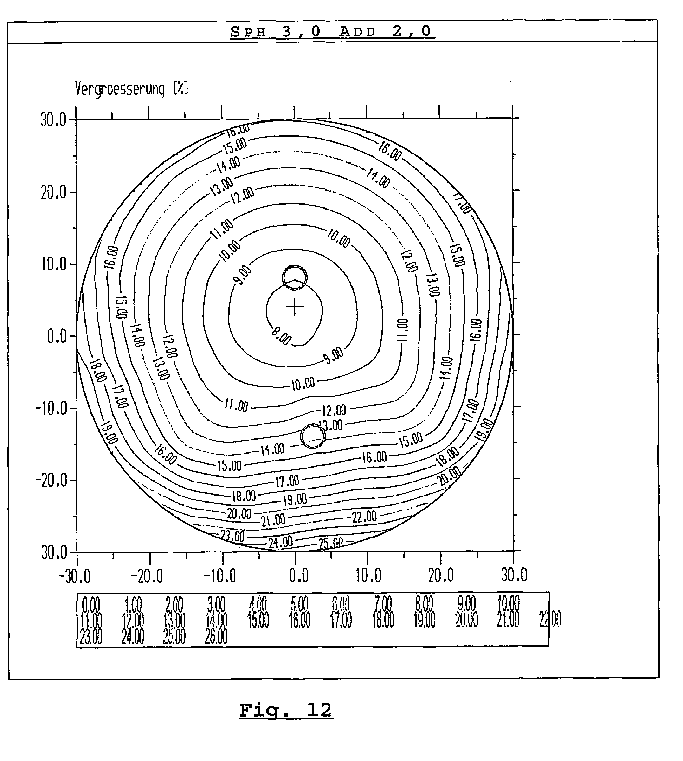

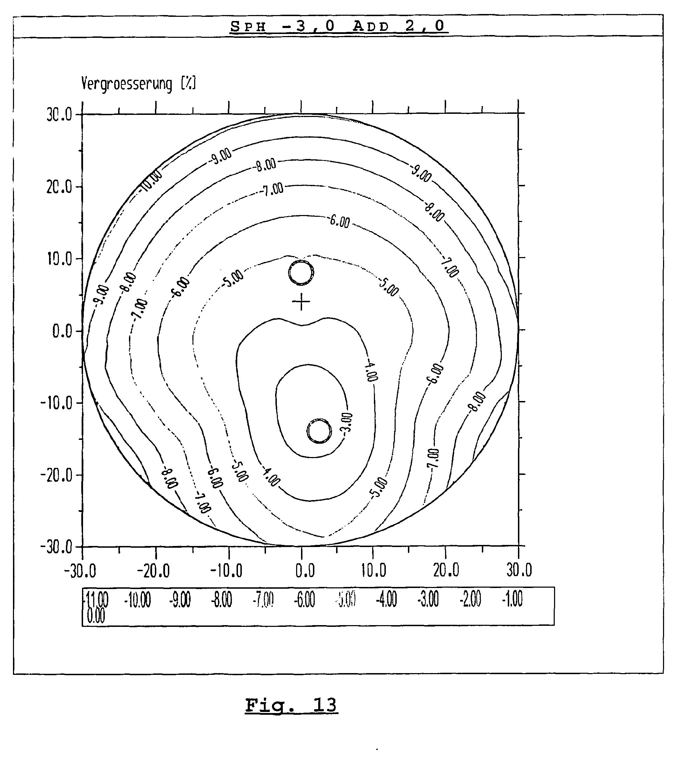

Die Figuren 9 bis 13 zeigen die Vergrößerung bei Ausführungsbeispielen nach der Erfindung bei verschiedenen Wirkungen, diesmal dargestellt für einen Kreis mit einem Radius von 30 mm um einen Punkt, der 4 mm senkrecht unterhalb des Zentrierpunktes liegt. Die Wirkungen und die Additionen sind jeweils in den Figuren angegeben.

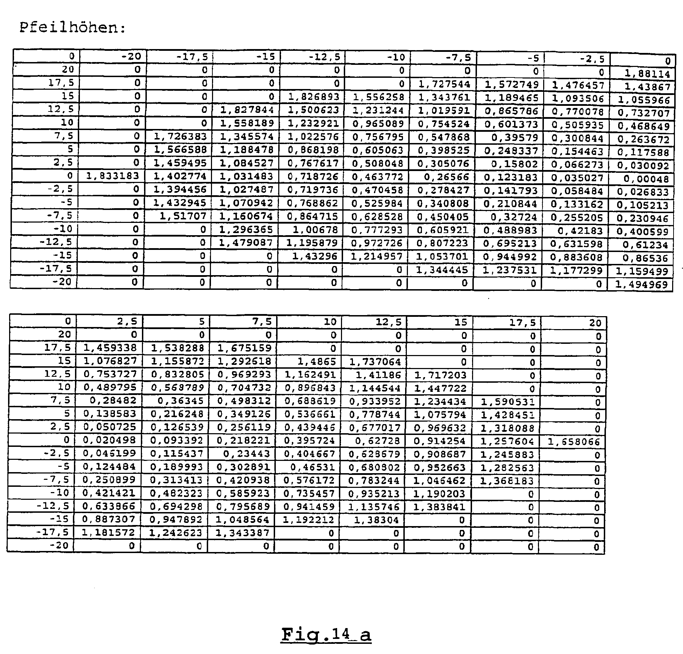

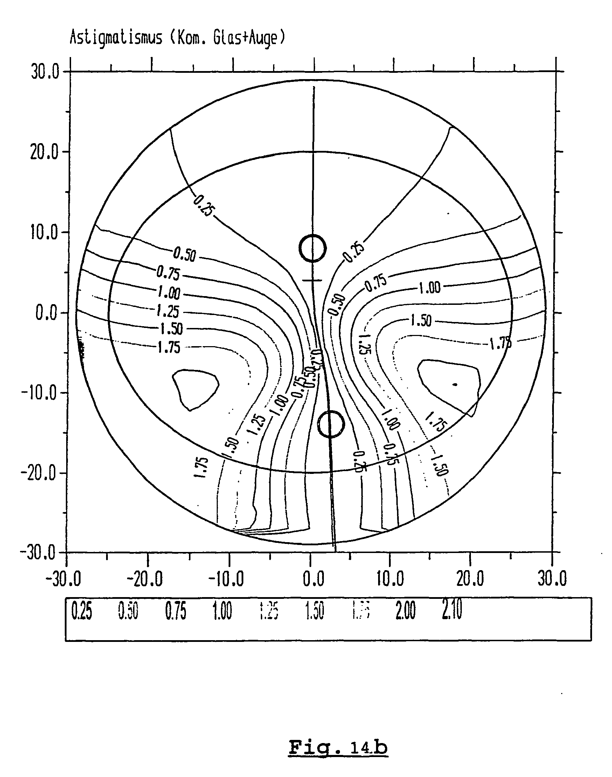

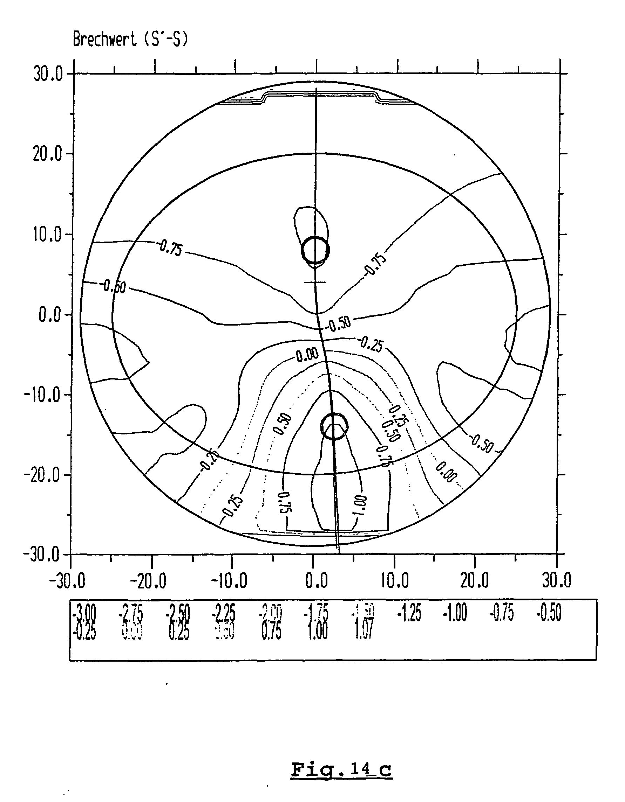

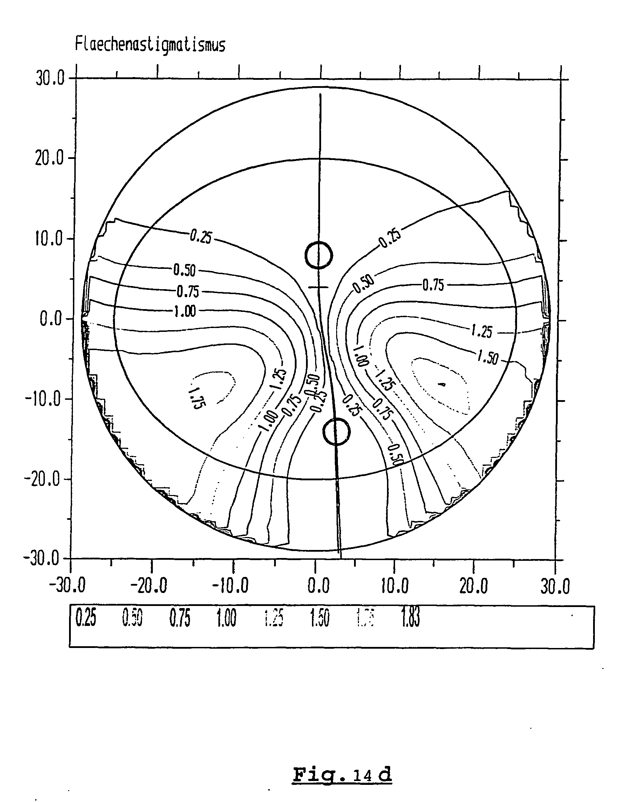

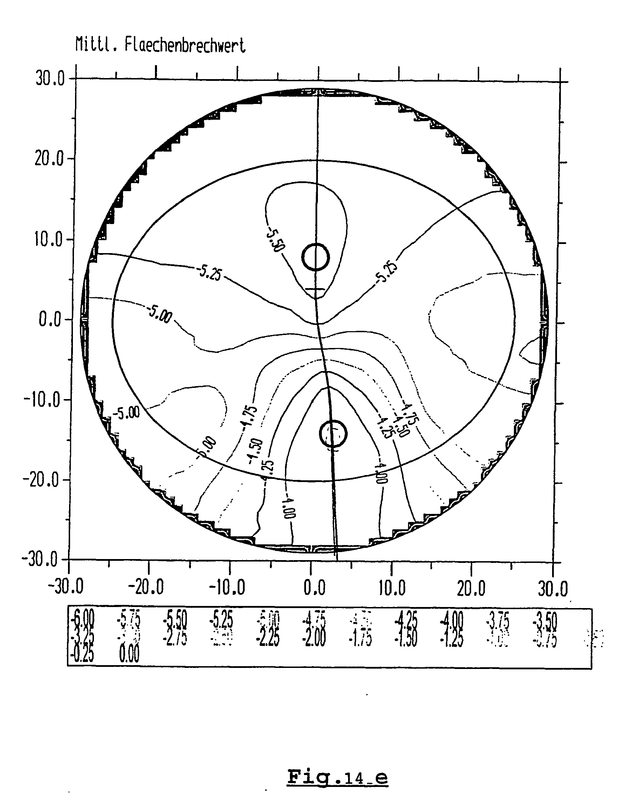

Das in Fig. 14 beschriebene konkrete Ausführungsbeispiel weist im Fernbezugspunkt eine sphärische Wirkung (mittlerer Gebrauchswert) von -1 dpt und eine Addition A von 2 dpt auf. Eine astigmatische Verordnung ist nicht vorhanden. In allen Figuren ist die Abszisse (x-Achse) die horizontale Achse und die Ordinate (y-Achse) die vertikale Achse in Gebrauchsstellung.

Der Fern- und der Nahbezugspunkt sind in den Figuren 14 b-e jeweils mit Kreisen dargestellt, der Zentrierpunkt ist mit einem Kreuz bezeichnet - ihre Lage ist den Figuren zu entnehmen. Weiterhin ist der Verlauf der Hauptlinie eingezeichnet.

Die Teilfigur 14a gibt die Pfeilhöhe der progressiven augenseitigen Fläche für das Ausführungsbeispiel an. Unter Pfeilhöhe versteht man den Abstand eines Punktes mit den Koordinaten x und y (horizontale bzw. vertikale Achse in der Gebrauchsstellung des Brillenglases) von der Tangentialebene des Flächenscheitels. In der Tabelle sind jeweils in der linken Spalte die y-Werte (von - 20 bis +20 mm) und in der obersten Zeile ab der Spalte 2 folgende die x-Werte (von -20 bis + 20mm) aufgetragen. Die Pfeilhöhen sind ebenfalls in Millimeter angeben. Der Wert 0 bedeutet, daß für diese x,y-Koordinaten keine Pfeilhöhe angegeben wird.

Die Teilfigur 14b zeigt die astigmatische Abweichung innerhalb eines Kreises mit dem Radius 30 mm um einen Punkt, der 4 mm unterhalb des sogenannten Zentrierkreuzes liegt. Die astigmatische Abweichung ist. der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung- im Falle eines astigmatismusfreien Auges 0 dpt- an.

Die Teilfigur 14c zeigt entsprechend die Isolinien für den mittleren Gebrauchswert dieses Ausführungsbeispiels. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

und ist ebenfalls in Form sogenannter Isolinien beginnend mit der Isolinie 0,75 dpt dargestellt.

Entsprechend sind in den Teilfiguren 14d und 14e die Isolinien der Flächendaten, nämlich der Flächenastigmatismus und der mittlere Flächenbrechwert dargestellt. Zur Definition dieser Flächendaten wird auf die einleitenden Ausführungen verwiesen.

Das in Fig. 14 dargestellte Ausführungsbeispiel weist folgende individualisierte Gebrauchsbedingungen auf:

| | |
|---|---|
| D1x | 4,55 |
| D1y | 4,55 |
| N | 1,597 |
| D | 1,59 |
| DRP | 1,0 |
| PD | 63 |

(fortgesetzt)

| HSA | 15 |
|---|---|
| Vorneigung | 0 |

Hierbei bedeuten:

D1x    Brechwert der Vorderfläche in x-Richtung(dpt)
D1y    Brechwert der Vorderfläche in y-Richtung(dpt)
n    Brechungsindex des Glasmaterials
d    Mittendicke der Brillenlinse in mm
DRP    Dickenreduktionsprisma in cm/m
PD    Pupillenabstand in mm
HSA    Hornhaut/Scheitel-Abstand in mm Vorneigungdes Brillenglases in Grad.

Alle dargestellten Ausführungsbeispiele der Erfindung haben folgende gemeinsame Eigenschaften:
Die Vergrößerung im Fernbezugspunkt ist sehr klein. Tabelle 1 zeigt die Vergrößerung für einige Ausführungsbeispiele nach der Erfindung.

**Tabelle 1: Vergrößerung [%] im Fernbezugspunkt**

| Do/Add [dpt] | 1,0 | 1,5 | 2,0 | 2,5 | 3,0 |
|---|---|---|---|---|---|
| -4,0 | -6,5 | -6,5 | -6,5 | -6,5 | -6,5 |
| -3,0 | - | - | -4,7 | - | - |
| -2,0 | -3,1 | -3,1 | -3,1 | -3,1 | -3,1 |
| 0 | 0,7 | 1,0 | 1,1 | 1,1 | 1,2 |
| 0,5 | 1,8 | 1,9 | 2,0 | 2,1 | 2,2 |
| 2,0 | 5,4 | 5,5 | 5,5 | 5,9 | 5,9 |
| 3,0 | - | - | 8,0 | - | - |
| 4,0 | 10,4 | 10,8 | 10,9 | 11,0 | 11,2 |

hierbei ist die Addition Add die Differenz der mittleren Gebrauchswerte im Nah- und Fernbezugspunkt und Do der mittlere Gebrauchswert im Fernbezugspunkt.
Die Vergrößerung im Nahbezugspunkt ist ebenfalls sehr klein. Tabelle 2 zeigt die Vergrößerung für einige Ausführungsbeispiele nach der Erfindung.

**Tabelle 2: Vergrößerung [%] im Nahbezugspunkt**

| Do/Add [dpt] | 1,0 | 1,5 | 2,0 | 2,5 | 3,0 |
|---|---|---|---|---|---|
| -4,0 | -7,5 | -6,4 | -4,9 | -3,8 | -3,0 |
| -3,0 | - | - | -2,6 | - | - |
| -2,0 | -2,8 | -1,6 | -0,3 | 0,9 | 1,8 |
| 0 | 2,9 | 4,0 | 5,1 | 6,3 | 7,5 |
| 0,5 | 4,7 | 5,6 | 6,4 | 7,5 | 8,8 |
| 2,0 | 9,3 | 10,0 | 10,7 | 12,0 | 13,4 |
| 3,0 | - | - | 13,7 | - | - |
| 4,0 | 16,0 | 16,5 | 17,0 | 18,5 | 19,9 |

Die minimale Vergrößerung in einem Bereich, der innerhalb eines Kreises, um einen Punkt, der 4 mm senkrecht unterhalb vom Zentrierpunkt liegt, mit einem Durchmesser von 40 mm, ist ebenfalls sehr klein. Tabelle 3 zeigt die

EP 1 277 075 B1

Vergrößerung für einige Ausführungsbeispiele nach der Erfindung.

**Tabelle 3: min Vergrößerung [%]**

| Do/Add [dpt] | 1,0 | 1,5 | 2,0 | 2,5 | 3,0 |
|---|---|---|---|---|---|
| -4,0 | -9,7 | -9,6 | -9,6 | -9,5 | -9,5 |
| -3,0 | - | - | -6,9 | - | - |
| -2,0 | -4,5 | -4,4 | -4,4 | -4,4 | -4,4 |
| 0 | 0,6 | 0,8 | 1,0 | 1,0 | 1,1 |
| 0,5 | 1,6 | 1,7 | 1,9 | 1,9 | 2,1 |
| 2,0 | 4,8 | 4,9 | 5,1 | 5,4 | 5,4 |
| 3,0 | - | - | 7,5 | - | - |
| 4,0 | 9,4 | 9,8 | 10,1 | 10,5 | 10,6 |

Die maximale Vergrößerung in einem Bereich, der innerhalb eines Kreises, um einen Punkt, der 4 mm senkrecht unterhalb vom Zentrierpunkt liegt, mit einem Durchmesser von 40 mm, ist weiterhin sehr klein. Tabelle 4 zeigt die Vergrößerung für einige Ausführungsbeispiele nach der Erfindung.

**Tabelle 4: max Vergrößerung [%]**

| Do/Add [dpt] | 1,0 | 1,5 | 2,0 | 2,5 | 3,0 |
|---|---|---|---|---|---|
| -4,0 | -5,6 | -5,1 | -4,2 | -3,5 | -2,8 |
| -3,0 | - | - | -2.33 | - | - |
| -2,0 | -2,1 | -1,4 | -0,3 | 1,0 | 2,3 |
| 0 | 3,3 | 4,7 | 6,5 | 8,0 | 9,8 |
| 0,5 | 5,3 | 6,7 | 8,0 | 8,8 | 9,8 |
| 2,0 | 10,6 | 11,8 | 13,7 | 15,0 | 17 |
| 3,0 | - | - | 17,0 | - | - |
| 4,0 | 18,0 | 19,0 | 21,0 | 23,0 | 25,0 |

Die erfindungsgemäßen Brillengläser, wie sie in den Tabellen und den Figuren dargestellt sind, sind in Gebrauchsstellung berechnet. Zur Berechnung einer progressiven Fläche in der Gebrauchsstellung wird eine Gebrauchssituation festgelegt. Diese bezieht sich entweder auf einen konkreten Nutzer, für den die einzelnen Parameter in der jeweiligen Gebrauchssituation eigens ermittelt und die progressive Fläche gesondert berechnet und gefertigt wird, oder auf Durchschnittswerte, wie sie in der DIN 58 208 Teil 2 beschrieben sind.

**Patentansprüche**

1.  Verfahren zum Herstellen eines Brillenglases, wobei das Brillenglas:

     - einen Fernteil, welcher zum Blicken in größere Entfernungen und insbesondere "ins Unendliche" ausgelegt ist,
     - einen Nahteil, welcher zum Blicken in kürzere Entfernungen und insbesondere "Lese-Entfernungen" ausgelegt ist,
     - eine zwischen Fernteil und Nahteil angeordnete Progressionszone, in der die Wirkung des Brillenglases von dem Wert in dem im Fernteil gelegenen Fernbezugspunkt auf den Wert des im Nahteil gelegenen Nahbezugspunktes längs einer Hauptlinie, welche eine zur Nase hin gewundene Kurve ist, um die Addition zunimmt, und
     - einen Zentrierpunkt

    aufweist; und
    wobei das Verfahren einen Berechnungsschritt aufweist, welcher derart erfolgt, daß innerhalb eines Kreises um

8

einen Punkt, der 4 mm senkrecht unterhalb vom Zentrierpunkt liegt, mit einem Durchmesser von 40 mm die absolute Differenz der maximalen und minimalen Vergrößerung in Prozent, wobei die Vergrößerung als der Quotient der Netzhautbildgröße mit Brillenglas zur Netzhautbildgröße ohne Brillenglas berechnet wird, kleiner oder gleich den Beträgen der Werte in der folgenden Tabelle ist, wobei es sich bei den in der Tabelle angegebenen Werten um Prozentangaben handelt und die Zwischenwerte durch lineare Interpolation gewonnen werden können:

| Do/Add [d pt] | 1,0 | 1,5 | 2,0 | 2,5 | 3,0 |
|---|---|---|---|---|---|
| -4,0 | 4,3 | 4,6 | 5,5 | 6,2 | 6,9 |
| -2,0 | 2,5 | 3,2 | 4,3 | 5,5 | 6,7 |
| 0 | 3,0 | 4,0 | 5,6 | 7,1 | 8,8 |
| 2,0 | 6,0 | 7,1 | 8,7 | 9,8 | 11,7 |
| 4,0 | 8,7 | 9,4 | 11,1 | 12,7 | 14,6 |

hierbei ist die Addition Add die Differenz der mittleren Gebrauchswerte im Nah- und Fernbezugspunkt und Do der mittlere Gebrauchswert im Fernbezugspunkt.

2.  Verfahren nach Anspruch 1, bei dem die Berechnung des Brillenglases derart erfolgt, daß die Vergrößerung ausgehend vom Fernbezugspunkt radial zunimmt und die Isolinien der gleichen Vergrößerung im wesentlich konzentrisch verlaufen.

3.  Verfahren nach Anspruch 1 oder 2, wobei:

    der Betrag der Vergrößerung im Fernbezugspunkt kleiner oder gleich den Beträgen der Werte in der folgenden Tabelle ist, wobei es sich bei den in der Tabelle angegebenen Werten um Prozentangaben handelt und Zwischenwerte durch lineare Interpolation gewonnen werden können:

| Do/Add [dpt] | 1,0 | 1,5 | 2,0 | 2,5 | 3,0 |
|---|---|---|---|---|---|
| -4,0 | -6,6 | -6,6 | -6,6 | -6,6 | -6,6 |
| -2,0 | -3,1 | -3,1 | -3,1 | -3,1 | -3,1 |
| 0 | 0,8 | 1,1 | 1,1 | 1,2 | 1,3 |
| 2,0 | 5,4 | 5,5 | 5,6 | 5,9 | 5,9 |
| 4,0 | 10,5 | 10,8 | 11,0 | 11,1 | 11,2 |

hierbei ist die Addition Add die Differenz der mittleren Gebrauchswerte im Nah- und Fernbezugspunkt und Do der mittlere Gebrauchswert im Fernbezugspunkt.

4.  Verfahren nach einem der Ansprüche 1 bis 3, wobei:

    der Betrag der Vergrößerung im Nahbezugspunkt kleiner oder gleich den Beträgen der Werte in der folgenden Tabelle ist, wobei es sich bei den in der Tabelle angegebenen Werten um Prozentangaben handelt und Zwischenwerte durch lineare Interpolation gewonnen werden können:

| Do/Add [dpt] | 1,0 | 1,5 | 2,0 | 2,5 | 3,0 |
|---|---|---|---|---|---|
| -4,0 | -7,6 | -6,5 | -5,0 | -4,0 | -3,1 |
| -2, 0 | -2, 8 | -1, 8 | -0, 5 | 1,0 | 2, 0 |
| 0 | 3,1 | 4,2 | 5,2 | 6,4 | 7,5 |

(fortgesetzt)

| 2,0 | 9,5 | 10,2 | 10,8 | 12,2 | 13,5 |
| 4,0 | 16,2 | 16,7 | 17,2 | 18,7 | 20,0 |

hierbei ist die Addition Add die Differenz der mittleren Gebrauchswerte im Nah- und Fernbezugs punkt und Do der mittlere Gebrauchswert im Fernbezugspunkt.

5. Verfahren nach einem der Ansprüche 1 bis 4, bei dem innerhalb eines Kreises um einen Punkt, der 4 mm senkrecht unterhalb vom Zentrierpunkt liegt, mit einem Durchmesser von 40 mm der Betrag der minimalen Vergrößerung größer oder gleich den Beträgen der Werte in der folgenden Tabelle ist, wobei es sich bei den in der Tabelle angegebenen Werten um Prozentangaben handelt und Zwischenwerte durch lineare Interpolation gewonnen werden können:

| Do/Add [dpt] | 1,0 | 1,5 | 2,0 | 2,5 | 3,0 |
|---|---|---|---|---|---|
| -4,0 | -10 | -10 | -10 | -10 | -10 |
| -2,0 | -4,8 | -4,8 | -4,8 | -4,8 | -4,8 |
| 0 | 0,5 | 0,7 | 0,8 | 0,9 | 1,0 |
| 2, 0 | 4,6 | 4, 7 | 5, 0 | 5,2 | 5,3 |
| 4,0 | 9,3 | 9,6 | 9,9 | 10,3 | 10,4 |

hierbei ist die Addition Add die Differenz der mittleren Gebrauchswerte im Nah- und Fernbezugs punkt und Do der mittlere Gebrauchswert im Fernbezugspunkt.

6. Verfahren nach einem der Ansprüche 1 bis 5, bei dem innerhalb eines Kreises um einen Punkt, der 4 mm senkrecht unterhalb vom Zentrierpunkt liegt, mit einem Durchmesser von 40 mm der Betrag der maximalen Vergrößerung kleiner oder gleich den Beträgen der Werte in der folgenden Tabelle ist, wobei es sich bei den in der Tabelle angegebenen Werten um Prozentangaben handelt und Zwischenwerte durch lineare Interpolation gewonnen werden können:

| Do/Add [dpt] | 1,0 | 1,5 | 2,0 | 2,5 | 3,0 |
|---|---|---|---|---|---|
| -4,0 | -5,4 | -4,9 | -4,1 | -3,3 | -2,6 |
| -2,0 | -2,0 | -1,2 | -0,1 | 1,2 | 2,4 |
| 0 | 3,5 | 4,8 | 6,6 | 8,2 | 10,0 |
| 2,0 | 10,8 | 12,0 | 13,9 | 15,2 | 17,2 |
| 4,0 | 18,2 | 19,2 | 21,2 | 23,2 | 25,2 |

hierbei ist die Addition Add die Differenz der mittleren Gebrauchswerte im Nah- und Fernbezugs punkt und Do der mittlere Gebrauchswert im Fernbezugspunkt.

7. Verfahren nach einem der Ansprüche 1 bis 6, bei dem die absolute Differenz der Vergrößerung zwischen dem Nah- und Fernbezugs punkt gleich oder kleiner den Werten in der folgenden Tabelle ist, wobei es sich bei den in der Tabelle angegebenen Werten um Prozentangaben handelt und Zwischenwerte durch lineare Interpolation gewonnen werden können:

| Do/Add [dpt] | 1,0 | 1,5 | 2,0 | 2,5 | 3,0 |
|---|---|---|---|---|---|
| -4,0 | 1,2 | 1,2 | 1,8 | 2,8 | 3,7 |

(fortgesetzt)

| -2,0 | 1,0 | 1,6 | 2,9 | 4,0 | 5,0 |
|------|-----|-----|-----|-----|-----|
| 0    | 2,5 | 3,2 | 4,2 | 5,3 | 6,4 |
| 2,0  | 4,1 | 4,7 | 5,3 | 6,3 | 7,8 |
| 4,0  | 5,8 | 5,9 | 6,3 | 7,7 | 8,8 |

hierbei ist die Addition Add die Differenz der mittleren Gebrauchswerte im Nah- und Fernbezugspunkt und Do der mittlere Gebrauchswert im Fernbezugspunkt.

**Claims**

1. Process for the production of a spectacle lens, wherein the spectacle lens has:

   • a far part, which is designed for looking into greater distances and in particular "into infinity",
   • a near part, which is designed for looking into shorter distances and in particular "reader distances",
   • a progression zone arranged between the far part and near part, in which the effect of the spectacle lens increases from the value in the far reference point located in the far part to the value of the near reference point located in the near part along a principal line, which is a curve curved towards the nose, around which the addition increases, and
   • a centring point

   and
   wherein the process has a calculation step, which is performed in such a way that within a circle around a point, which lies 4 mm vertically below the centring point, with a diameter of 40 mm, the absolute difference of the maximum and minimum magnification in per cent, wherein the magnification is calculated as the quotient of the retinal image size with spectacle lens relative to the retinal image size without spectacle lens, is less than or equal to the amounts of the values in the following table, wherein the values specified in the table are percentages and the intermediate values can be obtained by means of linear interpolation:

   | Do/Add [dpt] | 1.0 | 1.5 | 2.0  | 2.5  | 3.0  |
   |--------------|-----|-----|------|------|------|
   | -4.0         | 4.3 | 4.6 | 5.5  | 6.2  | 6.9  |
   | -2.0         | 2.5 | 3.2 | 4.3  | 5.5  | 6.7  |
   | 0            | 3.0 | 4.0 | 5.6  | 7.1  | 8.8  |
   | 2.0          | 6.0 | 7.1 | 8.7  | 9.8  | 11.7 |
   | 4.0          | 8.7 | 9.4 | 11.1 | 12.7 | 14.6 |

   wherein the addition Add is the difference of the average use values in the near and the far reference point and Do is the average use value in the far reference point.

2. Process according to claim 1, in which the calculation of the spectacle lens is performed in such a way that the magnification increases radially starting from the far reference point and the isolines of the same magnification run substantially concentrically.

3. Process according to claim 1 or 2, wherein:

   the amount of magnification in the far reference point is less than or equal to the amounts of the values in the following table, wherein the values specified in the table are percentages and intermediate values can be obtained by means of linear interpolation:

| Do/Add [dpt] | 1.0 | 1.5 | 2.0 | 2.5 | 3.0 |
|---|---|---|---|---|---|
| -4.0 | -6.6 | -6.6 | -6.6 | -6.6 | -6.6 |
| -2.0 | -3.1 | -3.1 | -3.1 | -3.1 | -3.1 |
| 0 | 0.8 | 1.1 | 1.1 | 1.2 | 1.3 |
| 2.0 | 5.4 | 5.5 | 5.6 | 5.9 | 5.9 |
| 4.0 | 10.5 | 10.8 | 11.0 | 11.1 | 11.2 |

wherein the addition Add is the difference of the average use values in the near and the far reference point and Do is the average use value in the far reference point.

**4.** Process according to one of claims 1 to 3, wherein:

the amount of magnification in the near reference point is less than or equal to the amounts of the values in the following table, wherein the values specified in the table are percentages and intermediate values can be obtained by means of linear interpolation:

| Do/Add [dpt] | 1.0 | 1.5 | 2.0 | 2.5 | 3.0 |
|---|---|---|---|---|---|
| -4.0 | -7.6 | -6.5 | -5.0 | -4.0 | -3.1 |
| -2.0 | -2.8 | -1.8 | -0.5 | 1.0 | 2.0 |
| 0 | 3.1 | 4.2 | 5.2 | 6.4 | 7.5 |
| 2.0 | 9.5 | 10.2 | 10.8 | 12.2 | 13.5 |
| 4.0 | 16.2 | 16.7 | 17.2 | 18.7 | 20.0 |

wherein the addition Add is the difference of the average use values in the near and the far reference point and Do is the average use value in the far reference point.

**5.** Process according to one of claims 1 to 4, in which within a circle around a point, which lies 4 mm vertically below the centring point, with a diameter of 40 mm, the amount of the minimum magnification is more than or equal to the amounts of the values in the following table, wherein the values specified in the table are percentages and intermediate values can be obtained by means of linear interpolation:

| Do/Add [dpt] | 1.0 | 1.5 | 2.0 | 2.5 | 3.0 |
|---|---|---|---|---|---|
| -4.0 | -10 | -10 | -10 | -10 | -10 |
| -2.0 | -4.8 | -4.8 | -4.8 | -4.8 | -4.8 |
| 0 | 0.5 | 0.7 | 0.8 | 0.9 | 1.0 |
| 2.0 | 4.6 | 4.7 | 5.0 | 5.2 | 5.3 |
| 4.0 | 9.3 | 9.6 | 9.9 | 10.3 | 10.4 |

wherein the addition Add is the difference of the average use values in the near and the far reference point and Do is the average use value in the far reference point.

**6.** Process according to one of claims 1 to 5, in which within a circle around a point, which lies 4 mm vertically below the centring point, with a diameter of 40 mm, the amount of the maximum magnification is less than or equal to the amounts of the values in the following table, wherein the values specified in the table are percentages and intermediate values can be obtained by means of linear interpolation:

| Do/Add [dpt] | 1.0 | 1.5 | 2.0 | 2.5 | 3.0 |
|---|---|---|---|---|---|

(continued)

| -4.0 | -5.4 | -4.9 | -4.1 | -3.3 | -2.6 |
| -2.0 | -2.0 | -1.2 | -0.1 | 1.2 | 2.4 |
| 0 | 3.5 | 4.8 | 6.6 | 8.2 | 10.0 |
| 2.0 | 10.8 | 12.0 | 13.9 | 15.2 | 17.2 |
| 4.0 | 18.2 | 19.2 | 21.2 | 23.2 | 25.2 |

wherein the addition Add is the difference of the average use values in the near and the far reference point and Do is the average use value in the far reference point.

**7.** Process according to one of claims 1 to 6, in which the absolute difference of the magnification between the near and the far reference point is equal to or less than the values in the following table, wherein the values specified in the table are percentages and intermediate values can be obtained by means of linear interpolation:

| Do/Add [dpt] | 1.0 | 1.5 | 2.0 | 2.5 | 3.0 |
| --- | --- | --- | --- | --- | --- |
| -4.0 | 1.2 | 1.2 | 1.8 | 2.8 | 3.7 |
| -2.0 | 1.0 | 1.6 | 2.9 | 4.0 | 5.0 |
| 0 | 2.5 | 3.2 | 4.2 | 5.3 | 6.4 |
| 2.0 | 4.1 | 4.7 | 5.3 | 6.3 | 7.8 |
| 4.0 | 5.8 | 5.9 | 6.3 | 7.7 | 8.8 |

wherein the addition Add is the difference of the average use values in the near and the far reference point and Do is the average use value in the far reference point.

## Revendications

**1.** Procédé de fabrication d'un verre de lunettes, le verre de lunettes comprenant :

- un segment de loin qui est conçu pour la vision à des distances éloignées et en particulier « à l'infini »,
- un segment de près qui est conçu pour la vision à courtes distances et en particulier « à des distances de lecture »,
- une zone progressive située entre le segment de loin et le segment de près, dans laquelle l'effet du verre de lunettes augmente, au niveau de l'addition, de la valeur du point de référence lointain situé dans le segment de loin à la valeur du point de référence proche situé dans le segment de près, le long d'une ligne principale qui est une courbe sinueuse en direction du nez, et
- un point de centrage ;

et
le procédé comprenant une étape de calcul, qui a lieu de telle sorte qu'à l'intérieur d'un cercle autour d'un point situé à 4 mm perpendiculairement en dessous du point de centrage, avec un diamètre de 40 mm, la différence absolue entre le grossissement maximal et minimal en pourcentage, le grossissement étant calculé comme le quotient de la dimension d'image rétinale avec verre de lunettes par la dimension d'image rétinale sans verre de lunettes, est inférieure ou identique aux montants des valeurs du tableau suivant, les valeurs mentionnées dans le tableau concernant des données en pourcentages, et les valeurs intermédiaires pouvant être obtenues par interpolation linéaire :

| Do/Add [dpt] | 1,0 | 1,5 | 2,0 | 2,5 | 3,0 |
| --- | --- | --- | --- | --- | --- |
| -4,0 | 4,3 | 4,6 | 5,5 | 6,2 | 6,9 |
| -2,0 | 2,5 | 3,2 | 4,3 | 5,5 | 6,7 |

(suite)

| 0 | 3,0 | 4,0 | 5,6 | 7,1 | 8,8 |
| 2,0 | 6,0 | 7, 1 | 8,7 | 9,8 | 11,7 |
| 4,0 | 8,7 | 9,4 | 11,1 | 12,7 | 14, 6 |

L'addition Add est la différence des valeurs moyennes d'utilisation aux points de référence proche et lointain, et Do est la valeur moyenne d'utilisation au point de référence lointain.

2. Procédé selon la revendication 1, dans lequel le calcul du verre de lunettes a lieu de sorte que le grossissement augmente radialement à partir du point de référence lointain, et les lignes isométriques du même grossissement s'étendent essentiellement concentriquement.

3. Procédé selon les revendications 1 ou 2, dans lequel :

le montant du grossissement au point de référence lointain est inférieur ou identique aux montants des valeurs indiquées dans le tableau suivant, les valeurs mentionnées dans le tableau concernant des données en pourcentages et des valeurs intermédiaires pouvant être obtenues par interpolation linéaire :

| Do/Add [dpt] | 1,0 | 1,5 | 2,0 | 2,5 | 3,0 |
|---|---|---|---|---|---|
| -4,0 | -6,6 | -6,6 | -6,6 | -6,6 | -6,6 |
| -2,0 | -3,1 | -3,1 | -3,1 | -3,1 | -3,1 |
| 0 | 0,8 | 1,1 | 1,1 | 1,2 | 1,3 |
| 2,0 | 5,4 | 5,5 | 5,6 | 5,9 | 5,9 |
| 4,0 | 10,5 | 10,8 | 11,0 | 11,1 | 11,2 |

L'addition Add est la différence des valeurs moyennes d'utilisation aux points de référence proche et lointain, et Do est la valeur moyenne d'utilisation au point de référence lointain.

4. Procédé selon l'une quelconque des revendications 1 à 3, dans lequel
le montant du grossissement au point de référence proche est inférieur ou identique aux montants des valeurs indiquées dans le tableau suivant, les valeurs mentionnées dans le tableau concernant des données en pourcentages et les valeurs intermédiaires pouvant être obtenues par interpolation linéaire :

| Do/Add [dpt] | 1,0 | 1,5 | 2,0 | 2,5 | 3,0 |
|---|---|---|---|---|---|
| -4,0 | 7,6 | -6,5 | -5,0 | -4,0 | -3,1 |
| -2, 0 | -2,8 | -1,8 | -0,5 | 1,0 | 2,0 |
| 0 | 3,1 | 4,2 | 5,2 | 6,4 | 7,5 |
| 2,0 | 9,5 | 10,2 | 10,8 | 12,2 | 13,5 |
| 4,0 | 16,2 | 16, 7 | 17,2 | 18,7 | 20,0 |

L'addition Add est la différence des valeurs moyennes d'utilisation aux points de référence proche et lointain, et Do est la valeur moyenne d'utilisation au point de référence lointain.

5. Procédé selon l'une quelconque des revendications 1 à 4, dans lequel
à l'intérieur d'un cercle autour d'un point situé à 4 mm perpendiculairement en dessous du point de centrage, avec un diamètre de 40 mm, le montant du grossissement minimal est supérieur ou identique aux montants des valeurs du tableau suivant, les valeurs mentionnées dans le tableau concernant des données en pourcentages, et les valeurs intermédiaires pouvant être obtenues par interpolation linéaire :

| Do/Add [dpt] | 1,0 | 1,5 | 2,0 | 2,5 | 3,0 |
|---|---|---|---|---|---|
| -4,0 | -10 | -10 | -10 | -10 | -10 |
| -2,0 | -4,8 | -4,8 | -4,8 | -4,8 | -4,8 |
| 0 | 0,5 | 0,7 | 0,8 | 0,9 | 1,0 |
| 2,0 | 4,6 | 4,7 | 5,0 | 5,2 | 5,3 |
| 4,0 | 9,3 | 9,6 | 9,9 | 10,3 | 10,4 |

L'addition Add est la différence des valeurs moyennes d'utilisation aux points de référence proche et lointain, et Do est la valeur moyenne d'utilisation au point de référence lointain.

**6.** Procédé selon l'une quelconque des revendications 1 à 5, dans lequel
à l'intérieur d'un cercle autour d'un point situé à 4 mm perpendiculairement en dessous du point de centrage, avec un diamètre de 40 mm, le montant du grossissement maximal est inférieur ou identique aux montants des valeurs du tableau suivant, les valeurs mentionnées dans le tableau concernant des données en pourcentages, et les valeurs intermédiaires pouvant être obtenues par interpolation linéaire :

| Do/Add [dpt] | 1,0 | 1,5 | 2,0 | 2,5 | 3,0 |
|---|---|---|---|---|---|
| -4,0 | -5,4 | -4,9 | -4,1 | -3,3 | -2,6 |
| -2,0 | -2,0 | -1,2 | -0,1 | 1,2 | 2,4 |
| 0 | 3,5 | 4,8 | 6,6 | 8,2 | 10,0 |
| 2,0 | 10,8 | 12,0 | 13,9 | 15,2 | 17,2 |
| 4,0 | 18,2 | 19,2 | 21,2 | 23,2 | 25,2 |

L'addition Add est la différence des valeurs moyennes d'utilisation aux points de référence proche et lointain, et Do est la valeur moyenne d'utilisation au point de référence lointain.

**7.** Procédé selon l'une quelconque des revendications 1 à 6, dans lequel
la différence absolue de grossissement entre le point de référence lointain et proche est identique ou inférieure aux valeurs du tableau suivant, les valeurs mentionnées dans le tableau concernant des données en pourcentages, et les valeurs intermédiaires pouvant être obtenues par interpolation linéaire :

| Do/Add [dpt] | 1,0 | 1,5 | 2,0 | 2,5 | 3,0 |
|---|---|---|---|---|---|
| -4,0 | 1,2 | 1,2 | 1,8 | 2,8 | 3,7 |
| -2, 0 | 1,0 | 1,6 | 2,9 | 4,0 | 5,0 |
| 0 | 2,5 | 3,2 | 4,2 | 5,3 | 6,4 |
| 2,0 | 4,1 | 4,7 | 5,3 | 6,3 | 7,8 |
| 4,0 | 5,8 | 5,9 | 6,3 | 7,7 | 8,8 |

L'addition Add est la différence des valeurs moyennes d'utilisation aux points de référence proche et lointain, et Do est la valeur moyenne d'utilisation au point de référence lointain.

H1     H2

F1     F'2     F2
                F'1

w   y     w'

y'

e

<u>Fig. 1</u>

f'

w

y'

Hauptebene des Auges

<u>Fig. 2</u>

W

W'

Z'

Fig. 3

Fig. 4

Fig. 5

Vergroesserung [%]

**Fig. 6**

**Fig. 7**

Fig. 8

Fig. 9

Fig. 10

SPH 0,5 ADD 3,0

Vergroesserung [%]

Fig. 11

**Fig. 12**

SPH -3,0 ADD 2,0

Vergroesserung [%]

Fig. 13

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,88114 |
| 17,5 | 0 | 0 | 0 | 0 | 0 | 1,727544 | 1,572749 | 1,476457 | 1,43867 |
| 15 | 0 | 0 | 0 | 1,826893 | 1,556258 | 1,343761 | 1,189465 | 1,093506 | 1,055966 |
| 12,5 | 0 | 0 | 1,827844 | 1,500623 | 1,231244 | 1,019591 | 0,865786 | 0,770078 | 0,732707 |
| 10 | 0 | 0 | 1,558189 | 1,232921 | 0,965089 | 0,754524 | 0,601373 | 0,505935 | 0,468649 |
| 7,5 | 0 | 1,726383 | 1,345574 | 1,022576 | 0,756795 | 0,547868 | 0,39579 | 0,300844 | 0,263672 |
| 5 | 0 | 1,566588 | 1,188478 | 0,868198 | 0,605063 | 0,398525 | 0,248337 | 0,154463 | 0,117588 |
| 2,5 | 0 | 1,459495 | 1,084527 | 0,767617 | 0,508048 | 0,305076 | 0,15802 | 0,066273 | 0,030092 |
| 0 | 1,833183 | 1,402774 | 1,031483 | 0,718726 | 0,463772 | 0,26566 | 0,123183 | 0,035027 | 0,00048 |
| -2,5 | 0 | 1,394456 | 1,027487 | 0,719736 | 0,470458 | 0,278427 | 0,141793 | 0,058484 | 0,026833 |
| -5 | 0 | 1,432945 | 1,070942 | 0,768862 | 0,525984 | 0,340808 | 0,210844 | 0,133162 | 0,105213 |
| -7,5 | 0 | 1,51707 | 1,160674 | 0,864715 | 0,628528 | 0,450405 | 0,32724 | 0,255205 | 0,230946 |
| -10 | 0 | 0 | 1,296365 | 1,00678 | 0,777293 | 0,605921 | 0,488983 | 0,42183 | 0,400599 |
| -12,5 | 0 | 0 | 1,479087 | 1,195879 | 0,972726 | 0,807223 | 0,695213 | 0,631598 | 0,61234 |
| -15 | 0 | 0 | 0 | 1,43296 | 1,214957 | 1,053701 | 0,944992 | 0,883608 | 0,86536 |
| -17,5 | 0 | 0 | 0 | 0 | 0 | 1,344445 | 1,237531 | 1,177299 | 1,159499 |
| -20 | 0 | 0 | 0 | 0 | 0 | 0 | 0 | 0 | 1,494969 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,459338 | 1,538288 | 1,675159 | 0 | 0 | 0 | 0 | 0 |
| 15 | 1,076827 | 1,155872 | 1,292618 | 1,4865 | 1,737064 | 0 | 0 | 0 |
| 12,5 | 0,753727 | 0,832805 | 0,969293 | 1,162491 | 1,41186 | 1,717203 | 0 | 0 |
| 10 | 0,489795 | 0,568789 | 0,704732 | 0,896843 | 1,144544 | 1,447722 | 0 | 0 |
| 7,5 | 0,28482 | 0,36345 | 0,498312 | 0,688619 | 0,933952 | 1,234434 | 1,590531 | 0 |
| 5 | 0,138583 | 0,216248 | 0,349126 | 0,536661 | 0,778744 | 1,075794 | 1,428451 | 0 |
| 2,5 | 0,050725 | 0,126539 | 0,256119 | 0,439446 | 0,677017 | 0,969632 | 1,318088 | 0 |
| 0 | 0,020498 | 0,093392 | 0,218221 | 0,395724 | 0,62728 | 0,914254 | 1,257604 | 1,658066 |
| -2,5 | 0,046199 | 0,115437 | 0,23443 | 0,404667 | 0,628679 | 0,908687 | 1,245883 | 0 |
| -5 | 0,124484 | 0,189993 | 0,302891 | 0,46531 | 0,680802 | 0,952663 | 1,282563 | 0 |
| -7,5 | 0,250899 | 0,313413 | 0,420938 | 0,576172 | 0,783244 | 1,046462 | 1,368183 | 0 |
| -10 | 0,421421 | 0,482323 | 0,585923 | 0,735457 | 0,935213 | 1,190203 | 0 | 0 |
| -12,5 | 0,633866 | 0,694298 | 0,795689 | 0,941459 | 1,135746 | 1,383841 | 0 | 0 |
| -15 | 0,887307 | 0,947892 | 1,048564 | 1,192212 | 1,38304 | 0 | 0 | 0 |
| -17,5 | 1,181572 | 1,242623 | 1,343387 | 0 | 0 | 0 | 0 | 0 |
| -20 | 0 | 0 | 0 | 0 | 0 | 0 | 0 | 0 |

**Fig.14 a**

Astigmatismus (Kom. Glas+Auge)

| 0.25 | 0.50 | 0.75 | 1.00 | 1.25 | 1.50 | 1.75 | 2.00 | 2.10 |

**Fig. 14b**

Fig. 14 c

Flaechenastigmatismus

Fig. 14 d

Mittl. Flaechenbrechwert

Fig.14_e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0809126 A